# EUROPEAN PATENT SPECIFICATION

(11) **EP 2 682 587 B1**
(45) Date of publication and mention of the grant of the patent: **11.10.2017**
(21) Application number: 13170719.2
(22) Date of filing: 05.06.2013
(51) Int. Cl.: F02C 9/28, F02C 9/40, F23N 5/00

(54) **Automated tuning of gas turbine combustion systems**
Automatisierte Regelung von Gasturbinenverbrennungssystemen
Réglage automatique de systèmes de combustion de turbine à gaz

(30) Priority: 05.07.2012 US 201213542222
(43) Date of publication of application: 08.01.2014
(73) Proprietor: Gas Turbine Efficiency Sweden AB, 175 27 Järfälle (SE)
(72) Inventor: Chandler, Christopher, Austin, TX Texas 78739 (US)
(74) Representative: Chapman, Patrick

(56) References cited:
- EP-A2- 2 249 007
- US-A1- 2011 265 487

## Description

### Technical Field

The present disclosure relates to an automated system to sense the operating condition of a turbine combustion system and to make adjustments to achieve desired operation of the turbine combustion system.

### Background

Lean premixed combustion systems have been deployed on land based gas turbine engines to reduce emissions, such as NOx and CO. These systems have been successful and, in some cases, produce emission levels that are at the lower limits of measurement capabilities, approximately 1 to 3 parts per million (ppm) of NOx and CO. Although these systems are a great benefit from a standpoint of emission production, the operational envelope of the systems is substantially reduced when compared to more conventional combustion systems. As a consequence, the control of fuel conditions, distribution and injection into the combustion zones has become a critical operating parameter and requires frequent adjustment, when ambient atmospheric conditions, such as temperature, humidity and pressure, change. The re-adjustment of the combustion fuel conditions, distribution and injection is termed tuning.

Controlled operation of a combustion system generally employs a manual setting of the operational control settings of a combustor to yield an average operational condition. These settings may be input through a controller, which as used herein shall mean any device used to control the operation of a system. Examples include a Distributed Control System (DCS), a gas turbine controller, a programmable logical controller (PLC), a stand-alone computer with communication to another controller and/or directly to a system.

These settings are satisfactory at the time of the setup, but conditions may change when tuning issues arise and cause an unacceptable operation in a matter of hours or days. Tuning issues are any situation whereby any operational parameters of a system are in excess of acceptable limits. Examples include emissions excursion outside of allowable limits, combustor dynamics excursion outside of allowable limits, or any other tuning event requiring adjustment of a turbine's operational control elements. Other approaches use a formula to predict emissions based on a gas turbine's operating settings and select a set point for fuel distribution and/or EAST\48537727.1 overall machine fuel/air ratio, without modifying other control elements, such as fuel gas temperature. These approaches do not allow for timely variation, do not take advantage of actual dynamics and emission data or do not modify fuel distribution, fuel temperature and/or other turbine operating parameters.

Another variable that impacts the lean premixed combustion system is fuel composition. Sufficient variation in fuel composition will cause a change in the heat release of the lean premixed combustion system. Such change may lead to emissions excursions, unstable combustion processes, or even blow out of the combustion system.

Mis-operation of the combustion system manifests itself in augmented pressure pulsations or an increase in combustion dynamics (hereinafter, combustion dynamics may be indicated by the symbol "δP"). Pulsations can have sufficient force to destroy the combustion system and dramatically reduce the life of combustion hardware. Additionally, improper tuning of the combustion system can lead to emission excursions and violate emission permits. Therefore, a means to maintain the stability of the lean premixed combustion systems, on a regular or periodic basis, within the proper operating envelope, is of great value and interest to the industry. Additionally, a system that operates by utilizing near real-time data, taken from the turbine sensors, would have significant value to coordinate modulation of operational control elements such as fuel distribution, fuel gas inlet temperature and/or overall machine fuel/air ratio.

Relevant background art includes US 2011/0265487 which discloses tuning processes implemented by an auto-tune controller for measuring and adjusting the combustion dynamics and the emission composition of a gas turbine engine and EP 2249007 which discloses a system for tuning the operation of a gas turbine based on measuring operational parameters of the turbine and directing adjustment of operational controls for various operational elements of the turbine. While real-time tuning of a combustion system can provide tremendous operational flexibility and protection for turbine hardware, a combustion system may concurrently experience a number of different operational issues. For example, most turbine operators of lean premixed combustion systems are concerned with exhaust emissions (NOx and CO) as well as combustor dynamics. It is not uncommon for both high NOx emissions and high combustor dynamics to coexist on a turbine. Additionally, tuning in response to one concern can make other constraints worse, for example tuning for low NOx can make combustor dynamics worse, tuning for high CO can make NOx worse, etc. It would be beneficial to provide a system whereby an algorithm is used to compare the current status of all tuning concerns, rank each concern in order of importance, determine the operational concern of most interest, and subsequently commence automated tuning to remediate this dominant operational concern.

### Summary of the Disclosure

The present disclosure provides a tuning system according to claim 1 for tuning the operation of a gas turbine. The system comprises a turbine controller and a turbine, wherein the turbine controller controls operational aspects of the turbine, and further comprises operational turbine controls for controlling operational control elements of the turbine, including at least one of turbine fuel distribution or the fuel temperature. The system also has a tuning controller communicating with the turbine controls. The tuning controller is configured to tune the operation of the turbine in accordance with the following steps: receiving operational data about the turbine, specifying tuning priorities wherein the specifying operates to change predetermined operational limits, determining whether sensed operational data is within predetermined operational limits and producing one or more indicators if the operational data is not within predetermined operational limits wherein the indicators have varying degrees of severity based on how close the turbine operation is to the outside of the operational limits, ranking the one or more indicators to determine a dominant tuning concern, and tuning the operation of the turbine based on the dominant tuning concern.

The present disclosure also provides a method of tuning the operation of a gas turbine according to claim 6. The turbine has turbine controls for controlling various operational elements of the turbine. The method includes the steps of receiving operational data about the turbine, specifying tuning priorities wherein the specifying operates to change predetermined operational limits and determining whether sensed operational data is within predetermined operational limits and producing one or more indicators if said operational data is not within predetermined operational limits wherein the indicators have varying degrees of severity base on how close the turbine operation is to the outside of the operational limits, ranking the one or more indicators to determine a dominant tuning concern and tuning the operation of the turbine based on dominant tuning concern.

The present disclosure further provides a computer readable medium according to claim 9 having embodied therein a computer program for tuning the operation of a combustion turbine, the turbine having turbine controls for controlling various operational elements of the turbine. The computer readable medium comprises code segments which, when executed by a computer, cause the computer to carry out the following steps: receiving operational data for the turbine, specifying tuning priorities wherein the specifying operates to change predetermined operational limits, determining whether sensed operational data is within predetermined operational limits and producing one or more indicators if said operational data is not within predetermined operational limits wherein the indicators have varying degrees of severity based on how close the turbine operation is to the outside of the operational limits. The computer readable medium also comprises code for ranking the one or more indicators to determine the dominant tuning concern and tuning the operation of the turbine based on the dominant tuning concern.

The present disclosure provides a controller and method for tuning the operation of a gas turbine of the type having sensors for measuring operational parameters of the turbine and controls for controlling various operational control elements of the turbine. The operational parameters of the turbine which are received by the controller may include one or more of the following: combustor dynamics, turbine exhaust temperature and turbine exhaust emissions. The operational control elements include one of more of the following: fuel distribution, fuel temperature and fuel air ratio. A communication link may be provided between the tuning controller, gas turbine controller and a main power plant control system. This link permits communication with the turbine's sensors and the operational controls from devices outside of the turbine system.

The controller operates by receiving data from the sensors. Operational priorities for the turbine are set within the controller and are typically selected from optimum NOx emissions, optimum power output and/or optimum combustor dynamics. The data received from the turbine sensors is compared to stored operational standards within the controller. The selected operational standards are based on the set operational priorities. A determination is made as to whether the turbine operation conforms to the operational standards. In addition, upon the data being determined to be out of conformance, a further determination is made of the dominant tuning concern. This further determination is based on the preset operational priorities. Once the logical determinations are made, the tuning controller communicates with the operational control means to perform a selected adjustment of an operational control element of the turbine. The selected adjustment is based on the dominant tuning concern and has a preset fixed incremental value and defined value range. Each incremental change is preferably input over a set period of time, which is sufficient for the turbine to gain operational stability, once an adjustment is made. Once the time period passes, operational data is again received from the turbine sensor means to determine if an additional incremental change to an operational control element is desired. Upon completing the adjustments within a defined range, a further operational control element is adjusted, again preferably based on the dominant tuning concern, and a further fixed incremental adjustment is made. The tuning process continues by the controller receiving operational data to determine if the operation is conforming to the operational standards or whether an additional adjustment is required. The operational control elements being adjusted by the tuning controller may include one or more of the following: the combustor fuel distribution split within the nozzles of the combustor, the fuel gas inlet temperature, and/or the fuel/air ratio within the turbine.

In a further aspect of the disclosure, the system performs a method for determination of the dominant gas turbine combustion system tuning scenario (dominant tuning concern) through the use of Boolean hierarchical logic and multiple levels of control settings.

In another aspect of the disclosure, the method performed relates to automated control of the gas turbine inlet fuel temperature through automated modification of the fuel gas temperature control set point within a Distributed Control System (DCS) or similar control system.

In a still further aspect of the disclosure, a method for automated control of a gas turbine inlet fuel temperature is defined by automated modification of the fuel gas temperature control set point within the fuel gas temperature controller.

In another aspect of the disclosure a method for communicating turbine control signals to a gas turbine controller is accomplished through the use of an existing gas turbine communication link with an external control device, such as, for example a MODBUS Serial or Ethernet communication protocol port existing on the turbine controller for communication with the Distributed Control System (DCS).

In a still further aspect of the disclosure a method for modification of a gas turbine combustion system is defined by a series of auto tuning settings via a user interface display, which utilizes Boolean-logic toggle switches to select user-desired optimization criteria. The method is preferably defined by optimization criteria based on Optimum Combustion Dynamics, Optimum NOx Emissions, Optimum Power, Optimum Heat Rate, Optimum CO Emissions, Optimum Heat Recovery Steam Generator (HRSG) Life, Optimum Gas Turbine Fuel Blend Ratio or Optimal Gas Turbine Turndown Capability whereby toggling of this switch changes the magnitude of the combustor dynamics control setting(s).

In a still further aspect of the disclosure a method for modification of a gas turbine combustion system is defined by real-time adjustment of a series of auto tuning settings via a tuning parameter adjustment interface, whereby the specific turbine control settings can be modified in real-time by the user/operator through modulation of a series of control devices, whereby activation of these control devices is allowed through triggering of the following Boolean-logic toggle switches: Optimum Combustion Dynamics, Optimum NOx Emissions, Optimum Power, Optimum Heat Rate, Optimum CO Emissions, Optimum Heat Recovery Steam Generator (HRSG) Life, Optimum Gas Turbine Fuel Blend Ratio or Optimal Gas Turbine Turndown Capability.

### Brief Description of Drawings

For the purpose of illustrating the disclosure, the drawings show forms that are presently preferred. It should be understood that the disclosure is not limited to the precise arrangements and instrumentalities shown in the drawings of the present disclosure.
Figure 1 shows an exemplary embodiment of a schematic representation of an operational plant communication system encompassing the gas turbine engine system and incorporating a gas turbine tuning controller.
Figure 2 shows an exemplary embodiment of a functional flow chart for the operation of a tuning controller according to the present disclosure.
Figure 3 shows an exemplary embodiment of a user interface display for selecting the optimization mode within the present disclosure.
Figure 4 shows an exemplary schematic of the inter-relationship of various optimization mode settings.
Figure 5 shows an exemplary overview schematic of the process steps utilized to determine the alarm signals triggered according to the present disclosure.
Figure 6 shows an exemplary process overview of the steps to determine allowable turbine tuning parameters.
Figure 7 shows a further detailed exemplary process according to the steps shown in Figure 6.
Figure 8 provides a further detailed exemplary schematic of the steps the present disclosure utilizes to determine the dominant tuning concern.
Figure 9 shows a first example schematic of the determination of the system's dominant tuning concern, given various alarm inputs into the present disclosure.
Figure 10 shows a second example schematic of the determination of the system's dominant tuning concern, given various alarm inputs into the present disclosure.
Figure 11 shows a third example schematic of the determination of the system's dominant tuning concern, given various alarm inputs into the present disclosure.
Figure 12 shows a fourth example schematic of the determination of the system's dominant tuning concern, given various alarm inputs into the present disclosure.
Figure 13 shows a first operational example of operational tuning of a gas turbine engine system as contemplated by the present disclosure.
Figure 14 shows a second operational example of operational tuning of a gas turbine engine system as contemplated by the present disclosure.
Figure 15 shows a third operational example of operational tuning of a gas turbine engine system as contemplated by the present disclosure.
Figure 16 shows a fourth operational example of operational tuning of a gas turbine engine system as contemplated by the present disclosure.
Figure 17 shows a first exemplary schematic representation of the function of the tuning controller of the present disclosure in maintaining the tuning of the turbine system.
Figure 18 shows a second exemplary schematic representation of the function of the tuning controller of the present disclosure in maintaining the tuning of the turbine system.
Figure 19 shows an exemplary embodiment of the tuning parameter adjustment interface, whereby control elements are utilized for real-time turbine control setting changes within the present disclosure.

### Detailed Description

The present disclosure generally relates to systems and methods for tuning the operation of combustion turbines. In the depicted embodiments, the systems and methods relate to automatic tuning of combustion turbines, such as those used for power generation. Persons of ordinary skill in the art will appreciate that the teachings herein can be readily adapted to other types of combustion turbines. Accordingly, the terms used herein are not intended to be limiting of the embodiments of the present invention. Instead, it will be understood that the embodiments of the present disclosure relate generally to the field of combustion turbines, and in particular for systems, methods and computer readable media for tuning of combustion turbines.

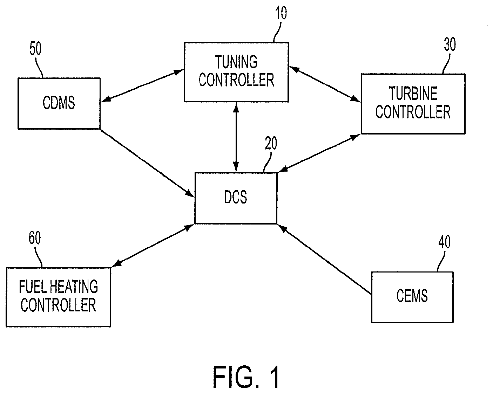

Figure 1 shows a communication diagram for a gas turbine engine (not shown), within which a tuning controller 10 of the present disclosure operates. As shown, a communication link, such as a Distributed Control System (DCS) is identified by the numeral 20, and provides a link to the various elements of the system. However, the operational elements of the turbine may be linked directly to each other, without the need for a DCS. As shown, turbine controller 30 communicates directly with the gas turbine (not shown) and with other elements of the system, such as the tuning controller 10, either directly or through the DCS 20. In the present disclosure, information relevant to turbine operation is directed through the to the tuning controller 10. This relevant information is also referred to as the turbine's operational parameters, which are parameters that are measured, by way of various types and number of sensors, to indicate the operational status of various aspects of the gas turbine. These parameters can be fed as inputs into the autotuning controller. Examples of operational parameters include combustor dynamics, turbine exhaust emissions, and turbine exhaust temperature (which is generally influenced by the overall fuel/air ratio of the turbine).

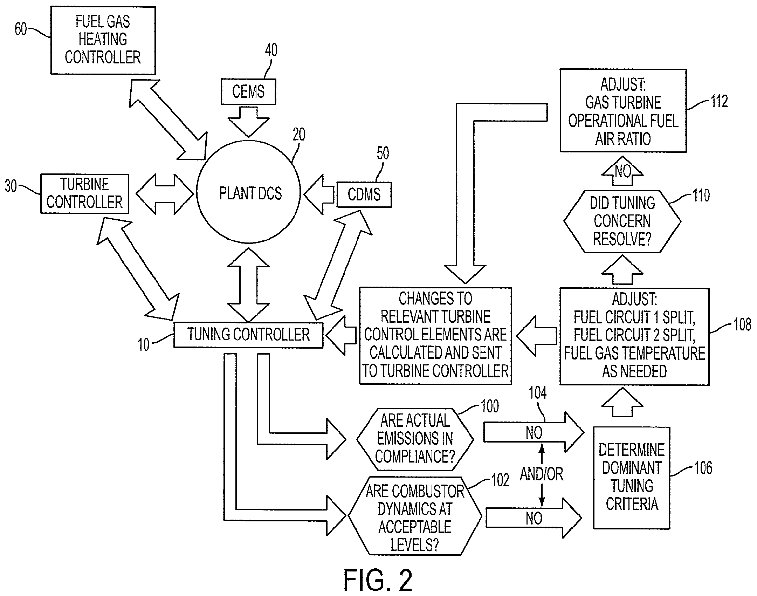

Referring now to Figures 1 and 2, the tuning controller 10 is contemplated to be a stand-alone computer, such as a PC, operating to run as a programmable logical controller (PLC), using a form of computer readable media. The tuning controller 10 is preferably a separate computer from the turbine controller 30 that is in constant communication from with the turbine controller 30. Signals from the tuning controller 10 may also be transferred to the turbine controller 30 or other controls within the system by the use of an external control device, such as a MODBUS Serial or Ethernet communication protocol port existing on or added to the system.

The relevant operational parameters are received from sensor means associated with the turbine. For example, the turbine exhaust emission reading is taken from stack emissions by a continuous emissions monitoring system (CEMS) 40, and sent to the tuning controller 10 and/or the turbine controller 30. Combustion dynamics are sensed using a dynamic pressure sensing probe located within the combustion region of the turbine combustor. As shown, a continuous dynamics monitoring system (CDMS) 50 is provided and communicates with the tuning controller 10 and turbine controller 30. The CDMS 50 preferably uses either direct mounted or wave guide connected pressure or light sensing probes to measure the combustion dynamics. Another relevant operational parameter is the fuel gas temperature, which is sensed at the fuel heating controller 60. The fuel temperature information is directed to the tuning controller 10 and turbine controller 30 from the fuel heating controller 60. Since part of the tuning operation may include adjustment of the fuel temperature, there may be a two-way communication between the tuning controller 10 and/or turbine controller 30 and the fuel heating unit 60.

Relevant operational data from the turbine is collected at least several times per minute. This data collection allows for near real-time system tuning. Most relevant turbine operational data is collected by the tuning controller 10 in near real-time. However, the turbine exhaust emissions is typically received from the CEMS 40 by the tuning controller 10 with a lag time of up to 2 to 8 minutes from current operating conditions. This time lag necessitates the need for the tuning controller 10 to receive and buffer relevant information, for a similar time lag, before making operational tuning adjustments. The tuning controller 10 tuning adjustment time lag assures that all of the operational (including exhaust emissions) data is representative of a stable turbine operation before and after any adjustments are made. Once the data is deemed stable, the tuning controller 10 determines whether there is a need for adjustment of operational control elements to bring the tuning parameters into acceptable ranges. If no adjustment is necessary, the tuning controller 10 maintains the current tuning and waits to receive the next data set. If changes are desired, tuning commences. As used herein, control elements are control inputs that can be manipulated by the tuning controller 10 to produce a change in the operational parameters of a gas turbine. These elements can either reside within the turbine controller 10, within the plant distributed control system (DCS), or within an external controller that controls the properties of inputs into the gas turbine (such as fuel gas temperature). Examples of operational control elements include combustor fuel splits, turbine fuel/air ratio, and fuel gas inlet temperature.

All determinations of the need for turbine tuning are performed within the tuning controller 10. The tuning operation is started based on an indicator, such as an "alarm" created by receipt of operational parameter data outside of preset operational criteria. In order for the tuning operation to be initiated, the alarm - and thus the data anomaly - must continue for a predetermined period of time.

One example of a tuning adjustment is the variation of the fuel nozzle pressure ratio to adjust combustion dynamics. With the requirement of higher firing temperatures to achieve greater flame temperatures and efficiency, turbine combustors must release more energy in a given combustor volume. Better exhaust emissions are often achieved by increasing the mixing rate of fuel and air upstream of the combustion reaction zone. The increased mixing rate is often achieved by increasing the pressure drop at the fuel nozzle discharge. As the mixing rate increases in combustors, the turbulence generated by combustion often leads to noise within the combustor and may lead to the generation of acoustic waves. Typically, acoustic waves are caused when the sound waves of the combustion flames are coupled with the acoustic characteristics of the combustor volume or the fuel system itself.

Acoustic waves may affect the internal pressure in the chamber. Where combustor pressure near a fuel nozzle rises, the rate of fuel flowing through the nozzle and the accompanying pressure drop decreases. Alternatively, a decrease in pressure near the nozzle will cause an increase in fuel flow. In cases where a low fuel nozzle pressure drop allows fuel flow oscillation, a combustor may experience amplified pressure oscillations. To combat the pressure oscillations within the combustor, combustion dynamics are monitored and the fuel air ratio and fuel nozzle pressure ratio may be modified to reduce or eliminate unwanted variations in combustor pressure, thereby curing an alarm situation or bringing the combustion system back to an acceptable level of combustion dynamics.

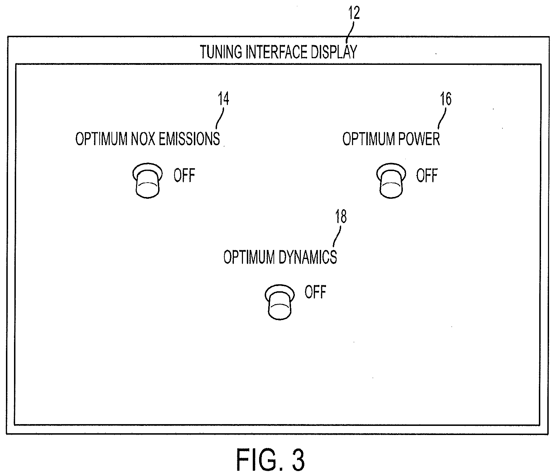

As shown in Figure 2, the data received from the CDMS 50, CEMS 40, fuel gas temperature controller 60 and other relevant turbine operating parameters from the turbine controller 30 may be directed through the DCS 20 to the tuning controller 10. Alternatively, although not shown, one or more of these elements may communicate directly with each other, without the need for a DCS 20. The input values are then compared to standard or target operational data for the turbine that are stored in the tuning controller as operational standards. The stored operational standards are based, at least in part, on the operational priority settings for the turbine in the form of tuning alarm levels, as will be described in more detail below. The priority settings are defined by user selected inputs on the main user interface 12 of the tuning controller 10, as shown in Figure 3. Based on the priority settings, a series of adjustments are made to the operation of the turbine by the turbine controller 10. The adjustments are directed to the control means, including the fuel heating unit 60 (Figure 1) and various other operational control elements of the turbine controller 30.

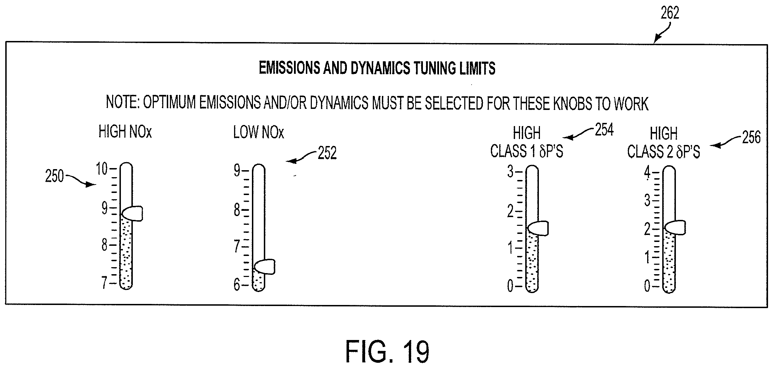

The interface display 12 depicted in Figure 3 is the main user interface display that end users will operate to determine tuning alarm levels. The interface 12 is comprised of switches (each having an On/Off indication). These switches allow the user to specify the desired tuning priorities for the operation of the turbine. In the embodiment shown, the switched operational priorities include optimum NOx emissions 14, optimum power 16 and optimum combustor dynamics 18. Each of these switches is set by the user to adjust the preferred operation of the turbine. Switching the switches from "Off" to "On" operates to change the alarm limits for each parameter. Additionally, switching some or all of the Operational Priorities 14, 16, 18 to "On" affords the user further turbine optimization though real-time adjustments of pertinent control settings via the Tuning Parameter Adjustment Interface 262 of Figure 19. Within the tuning controller 10 are functions that modify operations within the turbine, based on priorities set by the switches. The priorities may also be governed by hard coded logic in addition to user selected priorities and manual settings, as discussed in further detail below. For example, in the embodiment described here, if both the optimum NOx emissions switch 14 and the optimum power switch 16 are set to "On", the controller 10 will run in the Optimum NOx mode, not Optimum power. Thus, to run in Optimum power mode, the Optimum NOx emissions switch 14 must be "Off". In the embodiment shown, Optimum power 16 may only be selected if Optimum NOx 14 is in the off position. Optimum dynamics 18 can be selected at any time. It is explicitly noted that other User-Interface Toggle Switches (not shown) may be used, including parameters such as Optimum Heat Rate, Optimum CO emissions, Optimum Heat Recovery Steam Generator (HRSG) Life, Optimum Gas Turbine Fuel Blend Ratio, Optimal Gas Turbine Turndown Capability, etc.

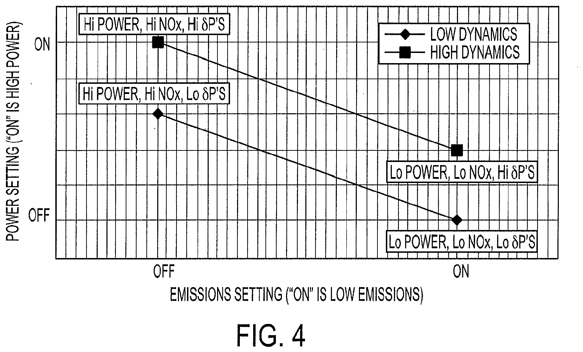

Figure 4 shows a graphical representation of the interrelationship of the interface display switches. As shown, switching one parameter "On" will alter the alarm limits to a different level than their "Off" level. In the example shown in Figure 4, the alarm limits are shown with both Optimum NOx and optimum power in the "On" position and in the "Off" position. These points on the graph are then modified by the selection of Optimum dynamics (represented throughout by the symbol δ) in either the "On" or "Off" position. The points shown on the graph of Figure 4 represent an exemplary set of limits for dynamics, based on the user's selected operational priorities.

Returning to Figure 2, there is shown a representation of the logical flow of the determinations and calculations made within the tuning controller 10. The tuning controller 10 receives the actual operating parameters of the turbine through the turbine controller 30, combustor dynamics through the CDMS 50, and the turbine exhaust emissions through the CEMS 40. This sensor data is directed to the tuning controller 10, either directly from the elements 40, 50 and 60 mentioned above, or through the DCS 20. The received sensor data is compared to stored operational standards to determine if the turbine operation is conforming to the desired settings. The operational standards are stored in the tuning controller 10 in the form of alarm levels, where normal operation of the turbine will return operational data for each parameter that is between the high and low alarm levels set for that parameter. The alarm levels for the operational standards are based on the preset operational priorities of the turbine, defined by the user switches 14, 16, 18 on the main user interface display 12 of the tuning controller 10, as discussed above with respect to Figure 3.

Based on the preset operational priorities, a hierarchical Boolean logic approach that is coded into the tuning controller 10 determines the dominant tuning concern based on operational priorities. From this logical selection, the tuning controller 10 implements a fixed incremental adjustment value for changing an operational parameter of the turbine within a maximum range of adjustment (e.g., high and low values). The tuning changes are made in a consistent, predetermined direction over a pre-determined increment of time and are dependent on the dominant tuning concern at the time. It is contemplated that no formulaic or functional calculations are made to determine tuning adjustments; rather, the magnitude of the incremental adjustments, the direction of the adjustments, and the time span between adjustments for each control element are stored in the tuning controller 10 and selected based on the alarm(s) returned and user's operational priorities. This criteria is preferably stored in the tuning controller 10 as tuning control constraints and may be modified from time to time as desired by the user.

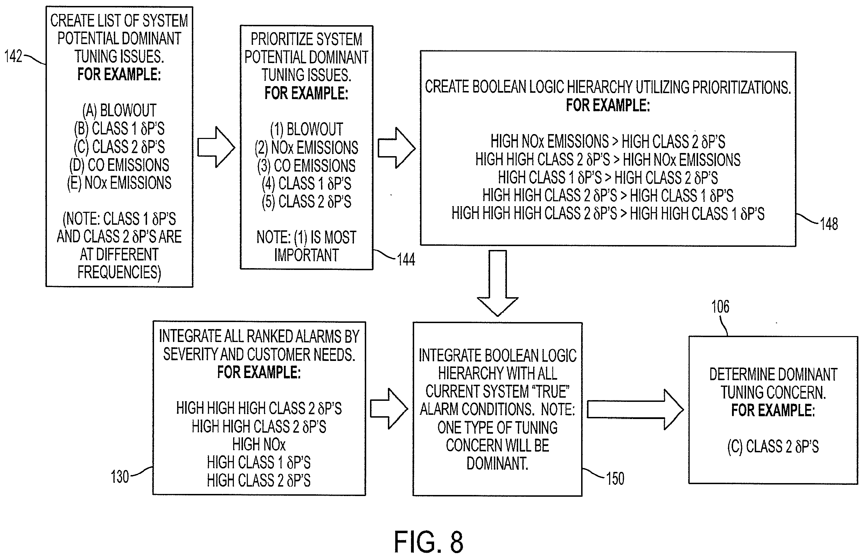

As shown in Figure 2, the tuning controller 10 determines whether the emissions are in compliance 100 and whether the combustor dynamics are at acceptable levels 102 by comparing the operating parameters received from the CDMS 50 and CEMS 40 respectively, to the operational standards and alarm levels saved in the tuning controller 10 as discussed above. If both are in compliance with the set operational standards, no further action is taken and the tuning controller 10 waits for the next data set from the CEMS 40 or the CDMS 50, or for other operational data from the turbine controller 30. If the data received from the CEMS 40 or the CDMS 50 is non-conforming with the operational standards, i.e. above or below alarm levels, as is the case with step 104 of Figure 2, the tuning operation moves to the next tuning step of first determining the dominant tuning concern 106. The logical adjustment of turbine operation is defined by the dominant tuning concern 106, which is based, at least in part, on the preset operational priorities set within the user interface 12, as will be discussed below with respect to Figure 8.

Once the dominant tuning concern is determined, the tuning controller 10 will attempt to correct the operational parameter to ensure that the levels are within the operational standards stored in the tuning controller 10. In a preferred embodiment of the operation, to correct a tuning issue, the tuning controller 10 will first attempt to incrementally change the turbine combustor fuel splits 108. The fuel split determines the distribution of the fuel flow to the fuel nozzles in each combustor. If adjusting the fuel splits 108 does not resolve the tuning issue and place the operational parameters data back into conformance with the operational standards, a further adjustment to an additional operational control element is performed. Such additional operational control elements may be other fuel splits (in the case of a system with multiple fuel splits, often referred to as FS1, FS2, etc) or other features of operation, such as fuel air ratio or fuel temperature. In the example shown, the next incremental adjustment may be a change of the fuel gas temperature set point. In this adjustment step, the tuning controller 10 sends a modified fuel gas inlet temperature signal to the DCS 20, which is then directed to the fuel heating unit 60.

After the incremental steps are taken in step 108, a check at step 110, is made to see if modification of the combustor fuel splits and/or fuel gas inlet temperature resolved the tuning issue. If further tuning corrections are needed, the tuning controller 10 will alter the overall fuel/air ratio 112. This approach makes changes to the turbine thermal cycle utilizing fixed incremental changes over pre-determined amounts of time. The step of modifying the fuel/air ration 112 is intended to adjust the exhaust temperature (up or down) in accordance with predetermined, standard control curves for the turbine operation, which are maintained within the memory of the tuning controller 10.

In the present disclosure, the normal mode of communication provides tuning changes utilizing control signals intended for a given control element that are directed by the tuning controller to the turbine controller 30 through the DCS 20. However, the control signals can also be communicated directly to the turbine controller 30, without use of the DCS 20. These adjustments are implemented directly within the various controller means within the system or through the turbine controller 30. When the operational data is returned to within the desired operational standards, the tuning settings are held in place by the tuning controller 10 pending an alarm resulting from non-conforming data received from the sensor means 40, 50, 60.

The adjustments sent from the tuning controller 10 to the turbine controller 30 or the associated controller means are preferably fixed in magnitude. Thus, the adjustments are not recalculated with new data or optimized to a target. The adjustments are part of an "open loop." Once started, the adjustments move incrementally to the preset maximum or maximum within a specified range, unless an interim adjustment places the operation data into conformance with the operational standards or a new dominant tuning concern arises. Under most circumstances, when the full incremental range for one operational control element is completed, the tuning controller 10 moves on to the next operational control element, which is defined by the preset operational priorities and dominant tuning concern. The logic of the tuning controller 10 drives the adjustment of operational control elements on a step-by-step basis, where the incremental steps of adjustment for each control element are stored within the memory of the tuning controller 10.

The tuning controller 10 preferably addresses one operational control element at a time. For example, the dominant tuning concern 106 dictates the first adjustment to be made. In the preferred example discussed above, the fuel distribution control element is first adjusted in step 108. As indicated in Figure 2, during this step, the fuel split of fuel circuit 1 is addressed, followed by the split for fuel circuit 2.

It should be noted that the application of fuel circuits 1 and 2 is general in nature and can be applied to the specific hardware configuration within any particular combustion system. Therefore, this tuning approach is applicable to any combustion system, regardless if it has only one fuel split, two fuel splits, or more than two fuel splits. If the combustion system has only one useful fuel split, then this second tuning step or adjusting fuel circuit 2 may be left within the tuning algorithm; but, abandoned in-place. If the combustion system has more than 2 fuel splits, then the 2 most effective fuel split "knobs" or control elements are utilized, or there are additional adjustments to the remaining fuel splits as dictated by the particular combustion system being tuned. Last, the user can turn off the tuning of the 2^{nd} fuel circuit, thereby allowing only one fuel circuit to be used in tuning.

The fuel gas inlet temperature adjustment generally follows the fuel split adjustments when needed. Within each step, there is an incremental adjustment, followed by a time lag to permit the adjusted turbine operation to stabilize. After the time lag, if the current operational data analyzed by the tuning controller 10 indicates that turbine operation still remains outside of the operational standards, the next incremental adjustment is made. This pattern repeats for each step. Under most circumstances, only when one adjustment step is completed does the tuning controller move onto the next operational control element.

The tuning controller 10 preferably controls combustion operation to maintain proper tuning in variable conditions of ambient temperature, humidity and pressure, all of which vary over time and have a significant effect on turbine operation. The tuning controller 10 may also maintain the tuning of the turbine during variation in fuel composition. Variation in fuel composition may cause a change in the heat release, which can lead to unacceptable emissions, unstable combustion, or even blow out. The tuning controller 10 preferably does not serve to adjust fuel composition to compensate; rather, it tunes the operational control elements (fuel gas distribution, fuel gas inlet temperature, and/or turbine fuel/air ratio) to address the effects on combustion output and discharge. However, an embodiment where the tuning controller 10 also serves to adjust fuel composition may be incorporated into the present system with additional control architecture.

In other tuning scenarios, an alternate order for the adjustments is contemplated. For example, if the dominant tuning concern is high NOx emissions, the fuel temperature adjustment may be skipped, going directly to the operational control curves to adjust fuel/air ratio. If, however, Class 1 dynamics is the dominant tuning concern, the incremental fuel temperature adjustment may be performed before going to the operational control curves. Alternatively, the step of making adjustments to control elements in accordance with the operational fuel air ratio control curves may be turned off completely, based on a user's priorities.

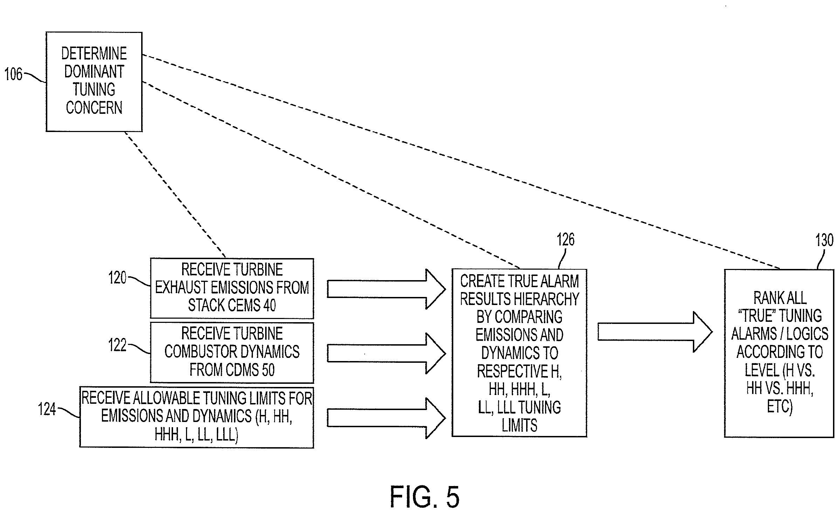

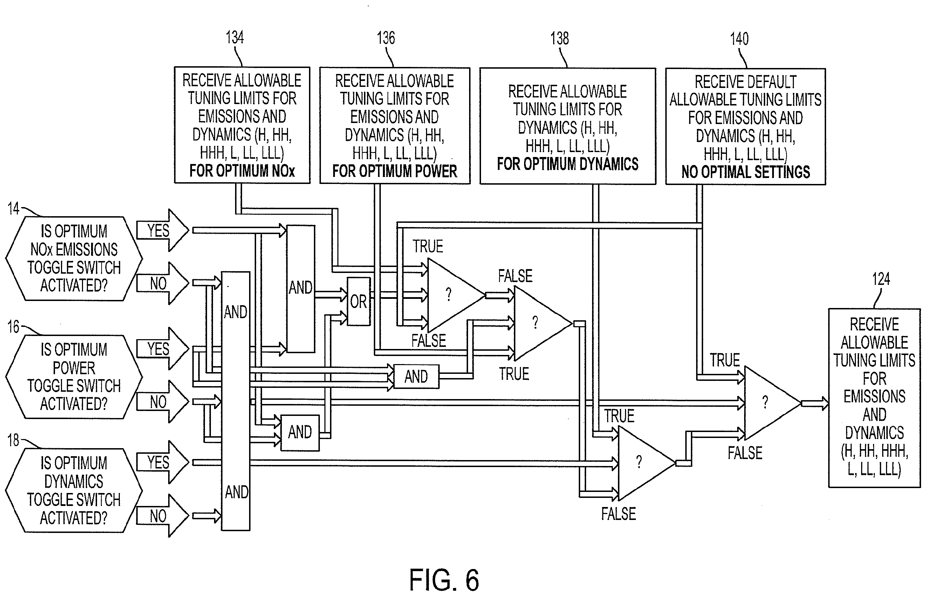

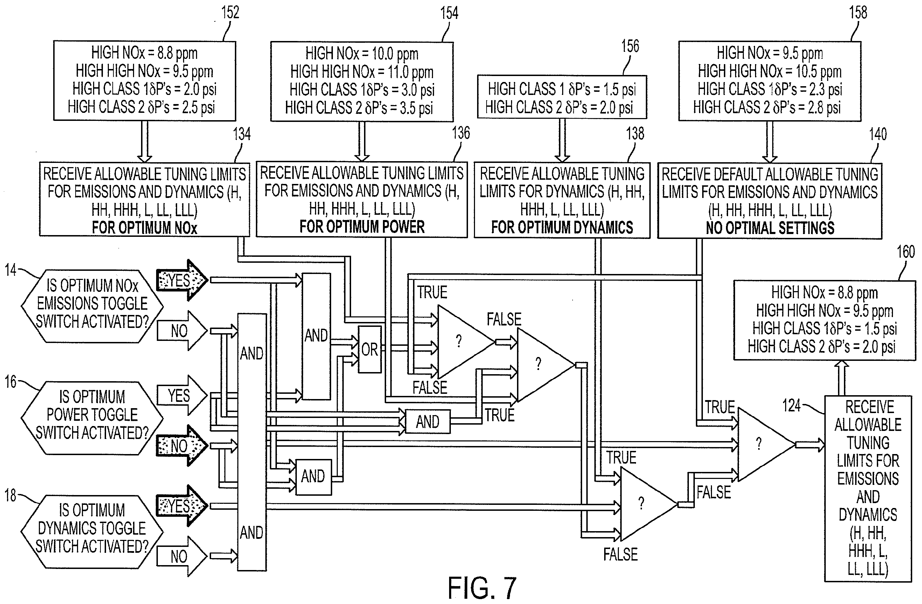

Figure 5 provides a schematic that details the framework for determining the dominant tuning concern 106, as included in Figure 2. Future steps will be described below with respect to Figure 8. First, relevant emissions parameters 120 and combustor dynamics 122 are received by the tuning controller 10 from the CEMS 40 and CDMS 50, as detailed above. The relevant emissions parameters 120 and combustor dynamics 122 are then compared to allowable tuning limits 124 that are also provided to the tuning controller 10. The allowable tuning limits are in the form of preset ranges that may be adjusted using the tuning interface 12 of Figure 3 and Tuning Parameter Adjustment Interface 262 of Figure 19, and determined according to the logic set forth below with respect to Figures 6 and 7. The output of this comparison is a series of "True" alarms 126 of various tuning concerns, where an alarm condition is indicated if the sensed operational data 120, 122 is above or below a given alarm range set forth in the tuning limits 124.

Alarm conditions have more than one level or tier. There are varying degrees of severity of an alarm, such as: high "H"; high-high "HH"; high-high-high "HHH" and low "L"; low-low "L"; low-low-low "LLL". The "True" logical alarms 126 are subsequently ranked according to their level of importance (e.g. high - high "HH" alarms are more important than high "H" alarms, etc) in step 130. If more than one tuning concern shares the same level, the tuning concerns will then be ranked according to the user preferences as set forth below with respect to Figure 8. If only one "True" alarm emerges, this will be selected and used as the dominant tuning concern 106 to initiate the tuning process as set forth in Figure 2. However, the results of the process of Figure 5, namely the ranked "True" alarms 130, will be processed through user determined criteria, as shown in Figure 8, before a dominant tuning concern 106 is confirmed.

In Figure 6, a flow chart is provided to explain how the allowable tuning limits 124 are determined. Once determined, the tuning limits 124 are compared to the operational data 120, 122 as set forth above and shown in Figure 5. First, the User Interface Toggle Switches 14, 16, 18 corresponding to those in the interface display 12 of Figure 3, are compared against each other, utilizing an internal hierarchy to allow passage of the alarm constraints relative to the most significant toggle switch. Thus, depending on which switches are in the "On" position, different tuning limits will be included in the allowable tuning limits 124. Each of Optimum NOx, Optimum Power and Optimum Dynamics has a collection of preset limits (denoted by the numerals 134, 136 and 138 in Figure 6), depending on whether the corresponding toggle switch 14, 16, 18 is in the "On" of "Off" position. There is also an internal set of default limits 140 to be used when none of the toggle switches are in the "On" position. Additionally, if some or all of the User Interface Toggle Switches 14, 16, or 18 are selected "On", the Tuning Parameter Adjustment Interface 262 of Figure 19 can be utilized by the user/operator in real-time, to adjust relevant tuning limits, with further internal controls to ensure valid limits are entered.

The internal hierarchy will determine which tuning limits shall take precedence in the event that competing toggle switches 14, 16 or 18 are in the "On" position. In the present example, the hierarchy ranks Optimum NOx above Optimum Power. Optimum Dynamics may be selected at any time and will simply alter the tuning limits of the other selections given, such as is shown in Figure 4. If Optimum NOx 14 and Optimum Power 16 are both in the "On" position, the tuning limits for Optimum NOx 134 will be used. In addition to the internal tuning limits, the Tuning Parameter Adjustment Interface 262 of Figure 19 can be used to change the actual High and Low NOx tuning limits 250, 252 in real-time. Additionally, the tuning limits for Optimum Dynamics 138 are utilized if this toggle switch 18 is activated. Likewise manual adjustment of the high Class 1 and Class 2 dynamics settings 254, 256 can be conducted manually using the Tuning Parameter Adjustment Interface 262 of Figure 19. If no User Interface Toggle Switches 14, 16, 18 are active, default tuning limits 140 are provided as the allowable tuning limits 124, and the Tuning Parameter Adjustment Interface 262 of Figure 19 will not be operable to change any of the tuning settings. All of the tuning limits 134, 136, 138 and 140 that may be used to construct the allowable tuning limits for the tuning controller 10 may be developed by the end user and programmers and can be hard coded into the tuning controller 10 or real-time adjusted in real time using the Tuning Parameter Adjustment Interface 262, provided some Optimization Criteria 14, 16, 18 are selected "On", for a given application. The methodology outlined in Figure 6 is meant to provide an exemplary framework for incorporation of a number of different User Interface Toggle Switches and tuning parameter adjustment control devices, such as those options set forth above with respect to Figures 3 and 19, whereby only a subset are specifically outlined in this disclosure.

Figure 7 shows a specific example of the flow chart of Figure 6 given for the determination of a subset of the system's allowable tuning limits. In this example, the tuning limits for High NOx, High High NOx, High Class 1 δP's, High Class 2 δP's will be determined based on preset tuning limits and the user's preferences. The various exemplary tuning limits are provided for Optimum NOx 134, Optimum Power 136, Optimum Dynamics 138, and No Optimal Settings 140 are given corresponding numerical values (shown respectively in blocks 152, 154, 156 and 158). The corresponding numerical values given for each criterion vary, such that the allowable limits 124 will be different depending on which toggle switches 14, 16 or 18 are selected and associated manual tuning settings are manipulated using their respective Tuning Parameter Adjustment Interface 262 control devices 250, 252, 254, 256. By way of example, the Optimum NOx 134, 152 and Optimum Power 136, 154 give limits for NOx, but also provide limits for Dynamics that are to be used in the event that Optimum Dynamics 138, 156 is not selected. However, in the event that the Optimum Dynamics toggle 18 is selected, the Class 1 δP's and Class 2 δP's values provided therefor 156 shall be used instead of the values listed with respect to Optimum NOx 134, 152 and Optimum Power 136, 154.

In this particular example, the toggle switches for Optimum NOx 14 and Optimum Dynamics 18 are selected, with the switch for Optimum Power 16 left in the "Off" position. Thus, the values from Optimum NOx for High NOx and High High NOx 152 are provided. Also, because Optimum Dynamics 18 is also selected, the Dynamics values for High Class 1 δP's and High Class 2 δP's 138, 156 replace those δP's values provided with respect to Optimum NOx 134, 152. As a result, the allowable tuning limits 124 are provided as shown in block 160. These allowable tuning limits 124 correspond to those used in Figure 5, as described above, to determine whether information from the CEMS 40 and CDMS 50 is in an alarm state or operating normally. As mentioned above, because the toggle switches for Optimum NOx 14 and Optimum Dynamics 18 are selected, the High NOx 250, Low NOx 252, High Class 1 Dynamics 254, and High Class 2 Dynamics 256 control settings from the Tuning Parameter Interface Display 262 of Figure 19 may be used to alter the values for the High NOx, High Class 1 and Class 2 Dynamics settings 124, 160 of Figure 7.

Figure 8, shows a schematic for the process of incorporating a user's priorities and the "True" alarm conditions received for determining the dominant tuning concern 106. It is this tuning concern 106 which dictates the turbine operational changes the turbine controller 10 performs, as shown in Figure 2.

First, a determination is made of all potential dominant tuning issues 142. These include, but are not limited to: combustor blowout, CO emissions, NOx emissions, Class 1 combustor dynamics (Class 1 δP's), and Class 2 combustor dynamics (Class 2 δP's). The list of potential dominant tuning issues 142 is determined by the user and programmer and may be based on a number of factors or operational criteria. By way of example, Class 1 and Class 2 combustor dynamics δP's refer to combustion dynamics occurring over specific ranges of acoustic frequencies, whereby the range of frequencies is different between Classes 1 and 2. Indeed, many combustion systems can possess different acoustic resonant frequencies corresponding to Class 1 and Class 2, and variations in these two dynamics classes may be mitigated utilizing different turbine operational parameter changes for each different turbine and / or combustor arrangement. It should also be noted that certain combustion systems may have none, 1, 2, or greater than 2 different "classes" (frequency ranges) of combustor dynamics which can be tuned. This disclosure utilizes a system whereby two different combustor dynamics classes are mentioned. However, it is fully intended that this disclosure can be broadly applied to any number of distinct dynamics frequency classes (from 0 to greater than 2).

After determination of the potential dominant tuning issues 142, these issues are ranked in order of significance 144 according to the end user's needs as well as the detrimental effects that each tuning concern can have on the environment and / or turbine performance. The relative importance of each potential dominant tuning concern can be different with each end user, and for each combustor arrangement. For example, some combustion systems will demonstrate an extreme sensitivity to combustor dynamics, such that normal daily operational parameter variations can cause a normally benign dynamics tuning concern to become catastrophic in a very short amount of time. In this case, one or both of the dominant dynamics tuning concerns (Class 1 and Class 2) may be elevated to Priority 1 (Most Important). By way of example in Figure 7, combustor blowout is listed as the most important Dominant Tuning Concern 144. This ranking is used to determine the dominant tuning concern in the event that there are multiple alarms with equal levels of severity. This ranking of Dominant Tuning Concerns 144, from most to least important, provides the overall framework where the specific Boolean Logic Hierarchy 148 is created. For example, assuming Class 1 and Class 2 δP's obey generally monotonic behavior relative to perturbations in system operational parameters, a High-High "HH" Class 2 δP's alarm may be more significant than High "H" Class 1 δP's alarm. Additionally, in the example given in Figure 8 for the Boolean Logic Hierarchy 148, High "H" NOx emissions is more significant than High "H" Class 2 dynamics. This means that if both High "H" NOx and High "H" Class 2 dynamics are both "in alarm" (Logic = True), in the absence of other alarms being "True", the autotuning system will tune for High "H" NOx because it is the dominant tuning concern. Finally, it can be seen that Blowout is ranked above NOx Emissions and both are ranked above Class 1 δP's. Thus, if there were high "H" alarms returned for all three categories, Blowout would be the dominant tuning concern, followed by NOx Emissions and then Class 1 δP's. This Boolean Logic Hierarchy 148 will be what is compared to the "True" alarms 130 returned by comparing the allowable tuning limits 124 to the operational data 120, 122 as set forth above with respect to Figure 5.

All "True" tuning alarms 130 are provided as ranked by severity (e.g. HHH above HH, etc.). The "True" tuning alarms 130 are then compared with the hard-coded Boolean Logic Hierarchy 148, in step 150 to determine which tuning will become the "True" Dominant Tuning Concern 106. This one "True" Dominant Tuning Concern 106 is now passed into the remainder of the autotuning algorithm, as detailed in Figure 2, as the Dominant Tuning Concern 106 to be mitigated by operational changes.

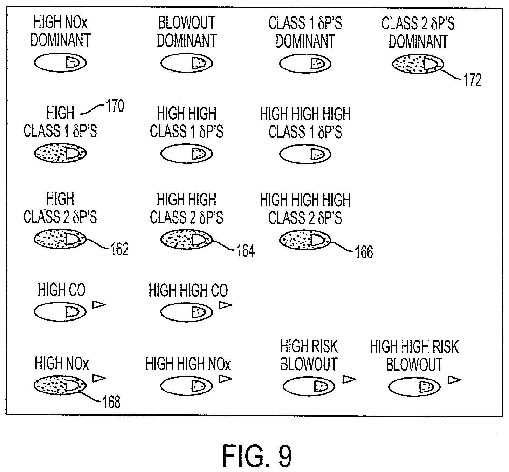

Figures 9-12 provide exemplary visual representations of the autotuning system interface depicting how the Boolean Logic Hierarchy works in practice. Figure 9 shows the alarms returned in connection with the example set forth above with respect to Figure 8. Namely, alarms are returned for Class 2 δP's at the levels of H 162, HH 164 and HHH 166. In addition, alarms for NOx 168 and Class 1 δP's 170 are returned at the H level. Since more extreme levels trump conflicts of different alarms at the same level, the HHH Class 2 δP's is the priority and therefore the dominant tuning concern 172.

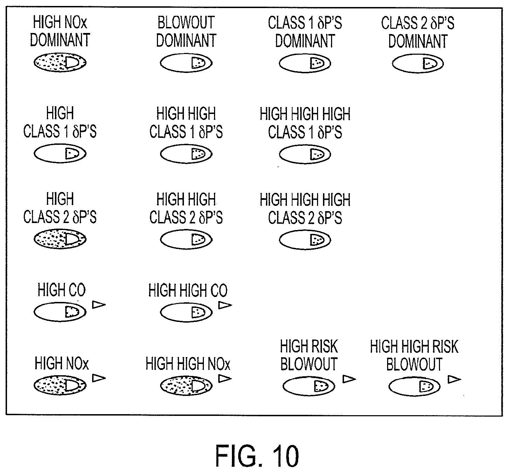

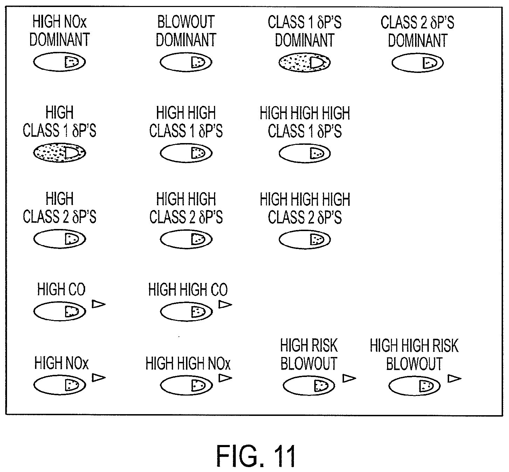

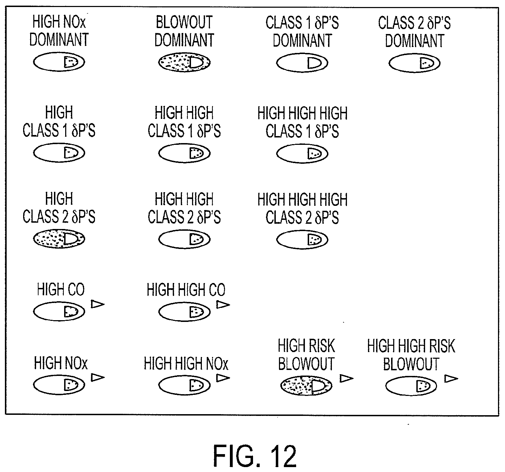

Figures 10-12 show various further examples of the dominant tuning concern for different "True" alarm levels under the user defined hierarchy 144 of Figure 8. Figure 10 shows a NOx alarm at the HH level returned, with no other alarms of this severity. Thus, high NOx is the dominant tuning concern. Figure 11 shows a Class 1 δP's at an H level as the only alarm condition, thus making Class 1 δP's as the dominant tuning concern. Finally, Figure 12 shows that Class 2 δP's and Blowout both return alarms at the H level. Referring to the user ranking of dominant tuning issues 144 in Figure 8, Blowout is ranked as a priority above Class 2 δP's and thus, although the severity of the alarms is equal, Blowout becomes the dominant tuning concern.

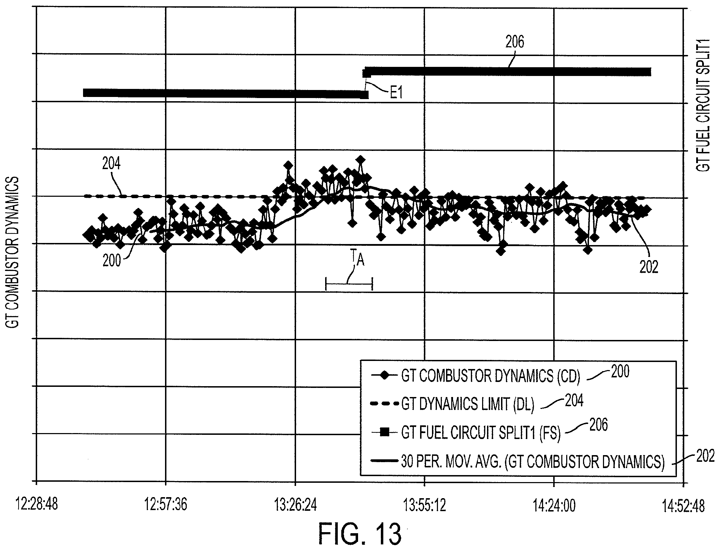

In Figures 13-16, there is shown various examples of the operational results of a tuning operation of a tuning controller of the present disclosure based on operational data from a running turbine system. In Figure 13, the dominant tuning concern is high Class 2 δP's, and a change in the combustor fuel split E1 is made in reaction to a high Class 2 δP's alarm generated when the combustor dynamics moves outside of the set operational priorities for optimum dynamics. The actual combustor dynamics data received by the turbine controller 10 from, for example, the CDMS 50 is designated as 200 in the graph. The moving average for the combustor dynamics is identified in the graph as 202. When the combustor dynamics exceed the dynamics alarm limit value 204 for a set period of time TA an alarm goes off within the tuning controller. This alarm causes the first event E1 and a resulting incremental adjustment in the combustor fuel split tuning parameter 206. As illustrated, the incremental increase in the fuel split causes a corresponding drop in the combustor dynamics 200, with the average combustor dynamics 202 dropping below the dynamics alarm limit 204. As time continues, the tuning is held by the tuning controller and the average combustor dynamics 202 maintains its operational position below the dynamics limit 204. Thus, no further adjustments necessary or alarms issued.

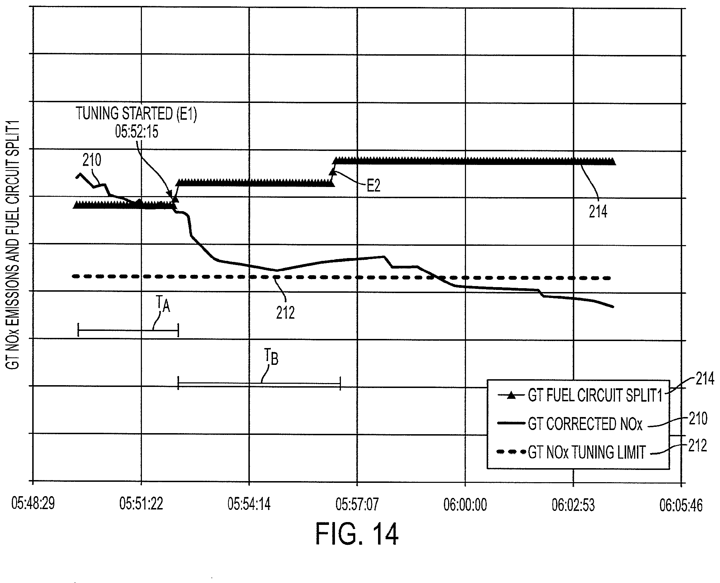

In Figure 14, the dominant tuning concern is high NOx emissions. As NOx emissions data 210 is received from the tuning controller, an alarm is generated after the passage of time TA. The alarm is caused by the NOx emissions 210 exceeding the operational standard or tuning limit 212. The alarm activates a first event E1 resulting in an incremental increase in the fuel split 214. After a period of time TB from the first event E1, the NOx alarm is still activated due to the NOx emissions 210 exceeding the preset tuning limit 212. This continued alarm after time TB causes a second event E2 and a second incremental increase in the fuel split value 214. This second increase is equal in magnitude to the first incremental increase. The second event E2 causes the NOx emissions level 210 to drop below the preset limit 212 within the review time period and halts the alarm. As the NOx emissions 210 remains below the limit 212, the fuel split 214 tuning is held and the operation of the turbine continues with the defined operational parameters.

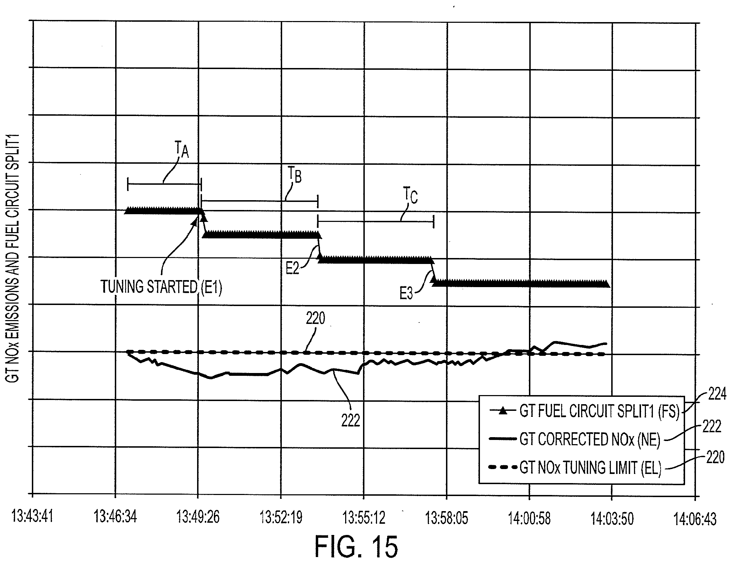

In Figure 15, the dominant tuning concern is low NOx emissions / Blowout, with the alarm created by a low reading received by tuning controller. As shown, the NOx tuning limit 220 is defined. Upon passage of the set time period TA from receiving NOx level data 222, the alarm is generated and a first event E1 occurs. At the first event E1, the fuel split level 224 is incrementally adjusted downward. After a set passage of time TB from event E1 additional NOx emissions data 222 is received and compared to the preset alarm level 220. Because the NOx is still below the alarm level 220, a second event E2 occurs resulting in a further incremental reduction in the fuel split value 224. A further passage of time TC from event E2 occurs and additional data is received. Again, the NOx data 212 is low, maintaining the alarm and resulting in a further event E3. At event E3, the fuel split value 224 is again reduced by the same incremental amount. This third incremental adjustment results in the NOx emissions 222 rising above the preset limit 220 and results in removal of the alarm. The fuel split 224 tuning value set after event E3 is held in place by the tuning controller 10.

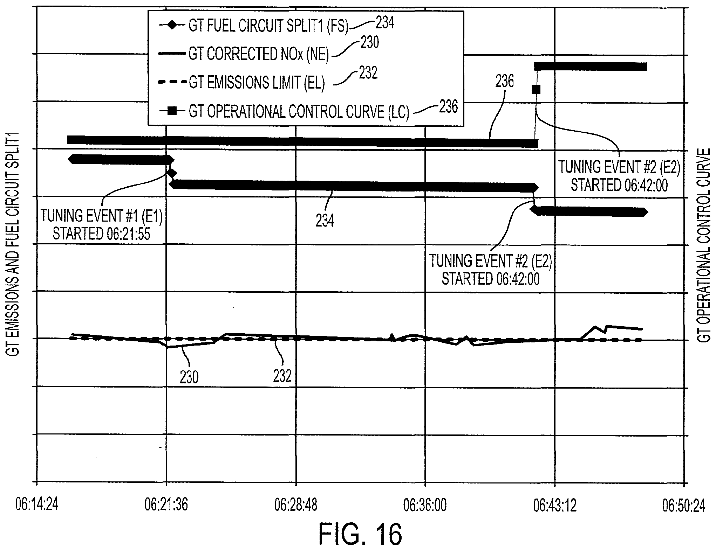

In Figure 16, the NOx emissions data 230 received by the tuning controller 10 is again tracking along the lower emissions limit 232, resulting in a low NOx / Blowout dominant tuning concern. At the first tuning event E1, the fuel split value 234 is incrementally dropped to result in a corresponding increase in the NOx emissions 230 over the lower limit 232. After this first incremental adjustment, the NOx emissions for a period of time holds above the limit 232 and then begins to again fall. At the second tuning event E2, the fuel split value 234 is again adjusted by the designated fixed incremental value. This second adjustment then places the fuel split value 234 at its defined minimum within the preset range of allowable values (determined as a hard coded limit within the tuning controller 10). Because this limit is reached, the tuning operation moves to the next operational parameter, which is normally the second fuel circuit adjustment. In the example provided, this second circuit value (not shown) is already at its set maximum/minimum and is therefore not adjusted. Thus, the tuning operation moves on to the next operational parameter, load control curves 236. As shown, at event E2 an incremental adjustment is made in the load control curve value 236. The increase in the load control curve value (turbine fuel to air ratio) 236 results in a corresponding increase in the NOx emission 230 to a value above the minimum 232 and removes the alarm. Upon removal of the alarm, the tuning settings are held and no further adjustments are made. The tuning controller 10 then proceeds to receive data from the sensor means, through the DCS, and continues to make comparisons with the set operational standards (including the minimum NOx emissions limit EL).

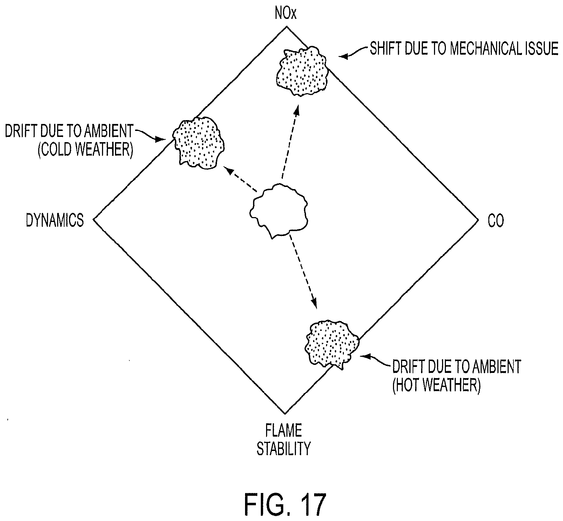

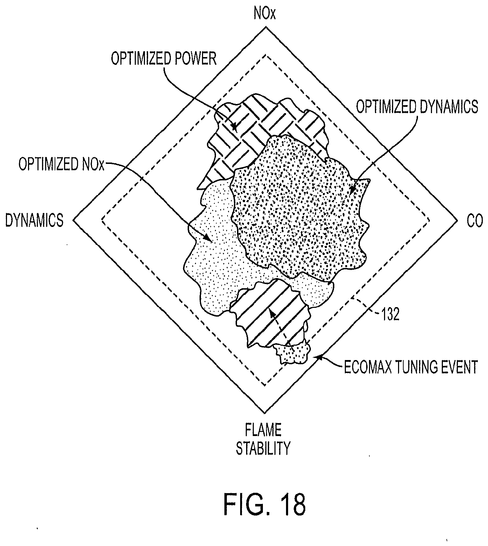

Figures 17 and 18 are examples of schematic representations of the operation of the tuning controller within contemplated disclosure. The operation of the turbine is defined by the emission output of the turbine, both NOx and CO, turbine dynamics and flame stability. In Figure 17, a tuned system is defined by a preferred operating envelope in the center of the operational diamond. This preferred operational envelope is typically manually set based on a prior start-up or operation of the turbine system. However, weather changes, both hot and cold, and mechanical changes within the turbine system cause a drift within the operational diamond. Hence a tuning is desired so as to maintain the turbine operation within the preferred range.

In Figure 18, a defined buffer or margin 132 is set within the operational diamond to serve as a warning for a drift of the turbine operation outside of the preferred operational envelope. Once one of the sensed operational values reaches the defined buffer line or limit, an alarm is generated, causing a tuning event. Based on the direction of the drift, the tuning controller creates a preset reaction to meet the specifics of the tuning need. This preset reaction is a defined incremental shift in an operational control element of the turbine as a means for moving the turbine operational envelope back into the desired range, and away from the buffer limit. It should be noted that each parameter may have more than one alarm, such as high "H"; high-high "HH" and high-high-high "HHH." These alarms may be sequentially located around the diamond shown to alert operators of how close the turbine operation is to the outside of desired operational limits.

Figure 19 delineates the Tuning Parameter Adjustment Interface 262, whereby the user/operator can adjust the tuning parameters in real-time to meet their respective operational goals. The Tuning Parameter Adjustment Interface 262 is preferably a graphical user interface, such as a computer monitor or other screen that may be operable using a computer mouse, track ball or touch screen technology. The tuning parameters are adjusted by sliding the respective parameter adjustment control device up/down, whereby the maximum and minimum limits for each tuning parameter can be programmatically modified as desired. Each tunable parameter control device 250, 252, 254, 256 is independent of any of the other parameters. For instance, manually adjusting High NOx 250 has no direct influence on the High Class 1 dynamics limits 254. Activation of these tuning parameter adjustments is achieved only with an "On" or "True" Boolean setting for their respective turbine Operational Priorities 14, 16, 18, as identified in Figure 3. For instance, Selecting Optimum NOX Emissions 14, shown in Figure 3, "On" activates the ability to manually adjust High NOx 250 and Low NOx 252 only. Alternatively, selecting Optimum Dynamics 18, shown in Figure 3, "On" allows manual adjustment of High Class 1 Dynamics 254 and High Class 2 Dynamics 256 only.

The present disclosure has been described and illustrated with respect to a number of exemplary embodiments thereof. It should understood by those skilled in the art from the foregoing that various other changes, omissions and additions may be made therein, without departing from the scope of the present disclosure, with the scope of the present disclosure being described by the foregoing claims.

## Claims

1. A tuning system for tuning the operation of a gas turbine, the system comprising a turbine controller (30) and a turbine, wherein the turbine controller (30) controls operational aspects of the turbine, the tuning system further comprising:
operational turbine controls for controlling operational control elements of the turbine, the operational turbine controls controlling at least one of turbine fuel distribution or the fuel temperature,
a tuning controller (10) communicating with the operational turbine controls, the tuning controller (10) configured to tune the operation of the turbine in accordance with the following
receiving operational data (120, 122, 124) about the turbine,
specifying tuning priorities wherein the specifying operates to change predetermined operational limits,
determining whether sensed operational data is within predetermined operational limits (134, 136, 138, 140) and producing one or more indicators if said operational data is not within predetermined operational limits,
ranking the one or more indicators (126) to determine a dominant tuning concern (106), and
tuning the operation of the turbine based on the dominant tuning concern (106),
**characterized in that** the indicators have varying degrees of severity based on how close the turbine operation is to the outside of the operational limits.

2. The tuning system according to claim 1, further comprising at least one sensor (40, 50) for sensing at least one of combustor dynamics or turbine exhaust emissions.

3. The tuning system according to claim 1 or 2, wherein the one or more indicators comprises one or more alarm levels indicating that the operational data of the turbine is outside of allowable limits of the turbine.

4. The tuning system according to any preceding claim, wherein the tuning controller (10) communicates directly with the turbine controller (30) or indirectly with the turbine controller through a distribution control system (DCS) (20) or similar control system.

5. The tuning system according to any preceding claim, further comprising a user interface operable (12) to adjust tuning parameter limits during operation of the tuning system.

6. A method of tuning the operation of a gas turbine, the turbine having turbine controls for controlling various operational elements of the turbine, the method comprising:
receiving operational data about the turbine at a tuning controller (10);
specifying tuning priorities wherein the specifying operates to change predetermined operational limts;
determining at the tuning controller (10) whether sensed operational data is within predetermined operational limits and producing one or more indicators if said operational data is not within predetermined operational limits; ranking the one or more indicators to determine a dominant tuning concern; and
tuning the operation of the turbine based on the dominant tuning concern, the method being **characterized in that** the indicators have varying degrees of severity based on how close the turbine operation is to the outside of the operational limits.

7. The method according to claim 6, wherein the step of specifying tuning priorities comprises ranking tuning priorities according to an end user's operational limits.

8. The tuning system or method according to any preceding claim, wherein the predetermined operational limits are determined according to a user's operational parameters for the turbine, wherein the user's operational parameters include one or more selected from the group comprising NOx levels, power level and combustion dynamics, heat rate, CO levels, heat recovery steam generator life, gas turbine fuel blend ratio and turndown capability.

9. A computer readable medium having embodied therein a computer program for tuning the operation of a combustion turbine, the turbine having turbine controls for controlling various operational elements of the turbine, **characterized in that** the computer readable medium comprises code segments which, when executed by a computer, cause the computer to carry out the following steps:
receiving operational data for the turbine;
specifying tuning priorities wherein the specifying operates to change predetermined operational limits;
determining whether sensed operational data is within predetermined operational limits and producing one or more indicators if said operational data is not within predetermined operational limits wherein the indicators have varying degrees of severity based on how close the turbine operation is to the outside of the operational limits;
ranking the one or more indicators to determine a dominant tuning concern; and
tuning the operation of the turbine based on the dominant tuning concern.

10. The computer readable medium according to claim 9, further comprising a code segment for allowing a user to select operational limits and wherein the predetermined operational limits are determined according to a user's operational parameters for turbine operation and are selected from the group comprising NOx levels, power level and/or combustion dynamics by a user operating a switch corresponding to each operational preference.

11. The method or computer readable medium according to any of claims 6 to 10, wherein real-time adjustment of tuning limits is achieved through the use of a graphical user interface.

12. The tuning system, method or computer readable medium according to any preceding claim, wherein tuning the operation of the turbine based on the dominant tuning concern comprises making incremental adjustments of one or more operational control elements of the turbine.

13. The tuning system, method or computer readable medium according to any preceding claim, wherein the one or more operational control elements are selected from the group comprising combustor fuel distribution split within the nozzles of the combustor, fuel gas inlet temperature, and fuel/air ratio within the turbine

14. The tuning system, method or computer readable medium according to any preceding claim, wherein the one or more indicators are ranked based on the severity of each indicator.

15. The tuning system, method or computer readable medium according to claim 14, wherein the one or more indicators are further ranked based on the tuning priorities, such that indicators of the same magnitude are ranked based on the tuning priorities.

## Patentansprüche

1. Abstimmsystem zur Abstimmung des Betriebs einer Gasturbine, wobei das System eine Turbinensteuerung (30) und eine Turbine umfasst, wobei die Turbinensteuerung (30) betriebliche Aspekte der Turbine steuert, das Abstimmsystem ferner umfassend:
Turbinenfunktionssteuerungen zum Steuern betrieblicher Stellglieder der Turbine, wobei die Turbinenfunktionssteuerungen mindestens entweder die Turbinenbrennstoffverteilung oder die Brennstofftemperatur steuern,
eine Abstimmsteuerung (10), die mit den Turbinenfunktionssteuerungen in Verbindung steht, wobei die Abstimmsteuerung (10) dafür ausgelegt ist, den Betrieb der Turbine wie folgt abzustimmen
Empfangen von Betriebsdaten (120, 122, 124) über die Turbine,
Festlegen von Abstimmungsprioritäten, wobei diese Spezifizierung dazu dient, vorbestimmte Betriebsgrenzen zu ändern,
Bestimmen, ob erfasste Betriebsdaten innerhalb vorbestimmter Betriebsgrenzen liegen (134, 136, 138, 140) und Erzeugen von einem oder mehreren Indikatoren, wenn die Betriebsdaten nicht innerhalb der vorbestimmten Betriebsgrenzen liegen
Festlegen einer Rangfolge für einen oder mehrere Indikatoren (126), um dominante Abstimmbelange (106) zu bestimmen und
Abstimmen des Betriebs der Turbine anhand der dominanten Abstimmbelange (106),
**dadurch gekennzeichnet, dass** die Indikatoren unterschiedliche Schweregrade aufweisen, je nachdem, wie nahe der Turbinenbetrieb an den Betriebsgrenzen liegt

2. Abstimmsystem gemäß Anspruch 1, ferner umfassend mindestens einen Sensor (40, 50), der mindestens entweder die Brennkammerdynamik oder die Turbinenabgasemissionen erfasst.

3. Abstimmsystem gemäß Anspruch 1 oder 2, wobei einer oder mehrere Indikatoren eine oder mehrere Warnstufen aufweisen, die anzeigen, dass die Betriebsdaten der Turbine außerhalb der für die Turbine zulässigen Grenzen liegen.

4. Abstimmsystem gemäß einem der vorhergehenden Ansprüche, wobei die Abstimmsteuerung (10) mit der Turbinensteuerung (30) direkt oder über ein dezentrales Prozessleitsystem (DCS) (20) oder ein ähnliches Steuersystem mit der Turbinensteuerung indirekt in Verbindung steht.

5. Abstimmsystem gemäß einem der vorhergehenden Ansprüche, ferner umfassend eine Benutzerschnittstelle (12) zum Einstellen der Abstimmparametergrenzen während des Betriebs des Abstimmsystems.

6. Verfahren zum Abstimmen des Betriebs einer Gasturbine, wobei die Turbine Turbinensteuerungen zum Steuern verschiedener Funktionselemente der Turbine aufweist, wobei das Verfahren umfasst:
Empfangen von Turbinenbetriebsdaten durch eine Abstimmsteuerung (10);
Festlegen von Abstimmungsprioritäten, wobei diese Spezifizierung dazu dient, vorbestimmte Betriebsgrenzen zu ändern;
Bestimmen durch die Abstimmsteuerung (10), ob erfasste Betriebsdaten innerhalb vorbestimmter Betriebsgrenzen liegen und Erzeugen eines oder mehrerer Indikatoren, wenn die Betriebsdaten nicht innerhalb der vorbestimmten Betriebsgrenzen liegen
Festlegen einer Rangfolge für einen oder mehrere Indikatoren, um dominante Abstimmbelange zu bestimmen; und
Abstimmen des Betriebs der Turbine anhand der dominanten Abstimmbelange, wobei das Verfahren **dadurch gekennzeichnet ist, dass** die Indikatoren unterschiedliche Schweregrade aufweisen, je nachdem, wie nahe der Turbinenbetrieb an den Betriebsgrenzen liegt.

7. Verfahren gemäß Anspruch 6, wobei der Schritt des Festlegens von Abstimmungsprioritäten umfasst, die Abstimmungsprioritäten gemäß den Betriebsgrenzen eines Endverbrauchers einer Rangfolge zuzuordnen.

8. Abstimmsystem oder Verfahren gemäß einem der vorhergehenden Ansprüche, wobei die vorgegebenen Betriebsgrenzen für die Turbine gemäß den Betriebsparametern eines Benutzers bestimmt werden, wobei die Betriebsparameter des Benutzers einen oder mehrere dieser Punkte umfassen: NOx-Pegel, Leistungspegel und Brennkammerdynamik, Wärmeaufwandskoeffizient, Kohlenmonoxid-Pegel, Lebensdauer des Wärmerückgewinnungsdampferzeugers, Gasturbinen-Brennstoffmischungsverhältnis und Herabregelmöglichkeit.

9. Ein computerlesbares Medium, in dem ein Computerprogramm zum Abstimmen des Betriebs einer Gasturbine ausgebildet ist, wobei die Turbine Turbinensteuerungen zur Steuerung verschiedener Funktionselemente der Turbine aufweist und **dadurch gekennzeichnet ist, dass** das computerlesbare Medium Codesegmente umfasst, die bei der Ausführung durch einen Computer den Computer dazu veranlassen, die folgenden Schritte auszuführen:
Empfangen von Betriebsdaten für die Turbine;
Festlegen von Abstimmungsprioritäten, worin das Festlegen dazu dient, vorbestimmte Betriebsgrenzen zu ändern;
Bestimmen, ob erfasste Betriebsdaten innerhalb vorbestimmter Betriebsgrenzen liegen und Erzeugen eines Indikators oder mehrerer Indikatoren, wenn die Betriebsdaten nicht innerhalb der vorbestimmten Betriebsgrenzen liegen, wobei die Indikatoren unterschiedliche Schweregrade aufweisen, je nachdem, wie nahe der Turbinenbetrieb an den Betriebsgrenzen liegt;
eine Rangfolge für einen oder mehrere Indikatoren festlegen, um dominante Abstimmbelange zu bestimmen; und Abstimmen des Betriebs der Turbine anhand der dominanten Abstimmbelange.

10. Computerlesbares Medium gemäß Anspruch 9, ferner umfassend ein Codesegment, damit ein Benutzer Betriebsgrenzen auswählen kann und wobei die vorbestimmten Betriebsgrenzen für den Turbinenbetrieb gemäß den Betriebsparametern eines Benutzers bestimmt werden und durch einen Benutzer, der einen entsprechenden Schalter für jede Betriebsvorgabe bedient, unter folgenden Punkten ausgewählt werden: NOx-Pegel, Leistungspegel und/oder Brennkammerdynamik.

11. Verfahren oder computerlesbares Medium gemäß einem der Ansprüche 6 bis 10, wobei durch die Verwendung einer grafischen Benutzeroberfläche eine Echtzeitanpassung von Abstimmgrenzen erreicht wird.

12. Abstimmsystem, Verfahren oder computerlesbares Medium gemäß einem der vorhergehenden Ansprüche, wobei das Abstimmen des Turbinenbetriebs anhand der dominanten Abstimmbelange erfolgt und inkrementelle Anpassungen von einem oder mehreren betrieblichen Stellgliedern der Turbine umfasst.

13. Abstimmsystem, Verfahren oder computerlesbares Medium gemäß einem der vorhergehenden Ansprüche, wobei ein oder mehrere betriebliche Stellglieder unter folgenden Punkten ausgewählt werden: Brennkammer, Brennstoffverteilung, Aufteilung auf die Düsen der Brennkammer, Heizgas-Eintrittstemperatur und Brennstoff/Luft-Verhältnis innerhalb der Turbine.

14. Abstimmsystem, Verfahren oder computerlesbares Medium gemäß einem der vorhergehenden Ansprüche, wobei ein Indikator oder mehrere Indikatoren anhand der Schwere jedes Indikators eingestuft werden.

15. Abstimmsystem, Verfahren oder computerlesbares Medium gemäß Anspruch 14, wobei ein Indikator oder mehrere Indikatoren zusätzlich anhand von Abstimmungsprioritäten eingestuft werden, so dass Indikatoren gleicher Bedeutung anhand der Abstimmprioritäten eingestuft werden.

## Revendications

1. Un système de réglage pour régler le fonctionnement d'une turbine à gaz, le système comprenant un contrôleur de turbine (30) et une turbine dans laquelle le contrôleur de turbine (30) contrôle les aspects de l'opération de la turbine, le système de réglage comprenant en outre :
des commandes de turbine opérationnelles pour le contrôle des éléments de commande opérationnels de la turbine, les commandes de la turbine opérationnelle contrôlant au moins l'une des distributions de carburant de la turbine ou le température du carburant,
un contrôleur de réglage (10) communiquant avec les commandes de turbine opérationnelles, le contrôleur de réglage (10) configuré pour régler le fonctionnement de la turbine conformément aux éléments suivants :
Réception des données opérationnelles (120, 122, 124) autour de la turbine, Spécification des priorités du réglage dans lesquelles la spécifiant fonctionne pour changer les limites opérationnelles prédéterminées
Détermination de ce que les données opérationnelles détectées sont dans des limites opérationnelles prédéterminées
(134, 136, 138, 140) et production d'un ou plusieurs indicateurs si lesdites données opérationnelles ne sont pas dans des limites opérationnelles prédéterminées,
classant l'un ou plusieurs indicateurs (126) pour déterminer un problème de réglage dominant (106), et
Réglant l'opération de la turbine en fonction de la préoccupation de réglage dominante (106),
**caractérisée en ce que** les indicateurs ont des degrés divers de gravité en fonction de la proximité de l'opération de turbine à l'extérieur des limites opérationnelles.

2. Système de réglage de la revendication 1, comprenant en outre au moins un capteur (40, 50) pour détecter au moins l'une des dynamiques de la chambre de combustion ou des émissions d'échappement de la turbine.

3. Système de réglage selon la revendication 1 ou 2, dans laquelle l'un ou plusieurs indicateurs comprennent un ou plusieurs niveaux d'alarme indiquant que les données opérationnelles de la turbine sont à l'extérieur des limites admissibles de la turbine.

4. Système de réglage selon toutes revendications précédentes, dans laquelle le contrôleur de réglage (10) communique directement avec le contrôleur de turbine (30) ou indirectement avec le contrôleur de turbine via un système de contrôle de distribution (DCS) (20) ou un système de contrôle similaire.

5. Système de réglage selon toutes revendications précédentes, comprenant en outre une interface utilisateur opérationnelle (12) pour régler les limites des paramètres de réglage pendant le fonctionnement du système de réglage.

6. Procédé de réglage du fonctionnement d'une turbine à gaz, la turbine ayant des commandes de turbine contrôlant différents éléments opérationnels de la turbine,
La méthode comprenant :
la réception des données opérationnelles concernant la turbine au niveau d'un contrôleur de réglage (10) ;
la spécification des priorités de réglage dans lesquelles le spécifiant fonctionne pour changer les limites opérationnelles prédéterminées ;
la déterminer au niveau du contrôleur de réglage (10) de ce que les données opérationnelles détectées se trouvent dans les limites opérationnelles prédéterminées et la production d'un ou plusieurs indicateurs si lesdites données opérationnelles ne sont
pas dans des limites opérationnelles prédéterminées ;
Classant un ou plusieurs indicateurs pour déterminer une préoccupation de réglage dominante ; et réglant l'opération de la turbine en fonction de la préoccupation dominante, la méthode étant **caractérisée en ce que** les indicateurs ont des degrés divers de gravité en fonction de la proximité de l'opération de la turbine à l'extérieur des limites opérationnelles.

7. Procédé selon la revendication 6 dans laquelle l'étape consistant à spécifier les priorités de réglage comprend la classification des priorités de réglage selon les limites opérationnelles de l'utilisateur final.

8. Système ou procédé de réglage selon toutes revendications précédentes, dans laquelle les limites opérationnelles prédéterminées sont déterminées en fonction des paramètres opérationnels d'un utilisateur pour la turbine, dans laquelle les paramètres opérationnels de l'utilisateur comprennent un ou plusieurs éléments sélectionnés parmi dans le groupe comprenant les niveaux NOx, le niveau de puissance et la dynamique de combustion, le taux de chaleur, les niveaux de CO, la durée de vie du générateur de vapeur de récupération de chaleur, le rapport de mélange de carburant de la turbine à gaz et la capacité de débit réduit.

9. Un support lisible par ordinateur qui y comporte un programme informatique pour régler le fonctionnement d'une turbine à combustion, la turbine ayant des commandes de turbine pour contrôler divers éléments opérationnels de la turbine, **caractérisées en ce que** le support lisible par ordinateur comprend des segments de code qui, lorsqu'ils sont exécutés par un ordinateur, rendent capable l'exécution par l'ordinateur des étapes suivantes :
la réception des données opérationnelles pour la turbine ;
la spécification des priorités de réglage dans lesquelles le spécifiant fonctionne pour changer les limites opérationnelles prédéterminées ;
la détermination de ce que les données opérationnelles détectées sont dans des limites opérationnelles prédéterminées la production d'un ou plusieurs indicateurs si lesdites données opérationnelles ne sont pas dans les limites opérationnelles prédéterminées dans lesquelles les indicateurs ont des degrés variables de gravité en fonction de la proximité de l'opération de la turbine à l'extérieur des limites opérationnelles ;
la classification d'un ou plusieurs indicateurs pour déterminer une préoccupation de réglage dominante ; et
le réglage de l'opération de la turbine en fonction de la préoccupation dominante.

10. Support lisible par ordinateur selon la revendication 9, comprenant en outre un segment de code pour permettre à un utilisateur de sélectionner des limites opérationnelles et dans lequel les limites opérationnelles prédéterminées sont déterminées en fonction des paramètres opérationnels de l'utilisateur pour l'opération de la turbine et sont sélectionnés dans le groupe comprenant les niveaux de NOx, le niveau de puissance et/ou les dynamiques de combustion par un utilisateur utilisant un commutateur correspondant à chaque préférence opérationnelle.

11. La méthode ou le support lisible par ordinateur selon toutes les revendications 6 à 10, dans lesquelles l'ajustement en temps réel des limites de réglage est obtenu grâce à l'utilisation d'une interface d'utilisateur graphique.

12. Le système de réglage, la méthode ou le support lisible par ordinateur en fonction de toute revendication précédente, dans laquelle le réglage du fonctionnement de la turbine en fonction de la préoccupation du réglage dominant consiste à effectuer des ajustements incrémentaux d'un ou plusieurs éléments de commande opérationnels de la turbine.

13. Le système de réglage, la méthode ou le support lisible par ordinateur en fonction de toute revendication précédente, dans laquelle l'un ou plusieurs éléments de commande opérationnels sont sélectionnés dans le groupe comprenant la distribution du carburant de la chambre de combustion répartie dans les buses de la chambre de combustion, la température d'entrée du gaz combustible et le rapport carburant/air dans la turbine

14. Le système de réglage, la méthode ou le support lisible par ordinateur en fonction de toute revendication précédente, dans laquelle le ou les indicateurs sont classés en fonction de la gravité de chaque indicateur.

15. Le système de réglage, la méthode ou le support lisible par ordinateur selon la revendication 14, dans laquelle le ou les indicateurs sont mieux classés en fonction des priorités de réglage, de sorte que les indicateurs de même ampleur sont classés en fonction des priorités de réglage.
